(19) **Europäisches Patentamt**
**European Patent Office**
**Office européen des brevets**

(11) **EP 3 675 387 A1**

(12) **EUROPEAN PATENT APPLICATION**

(43) Date of publication:
**01.07.2020 Bulletin 2020/27**

(51) Int Cl.:
***H04B 7/185*** (2006.01)

(21) Application number: **19197599.4**

(22) Date of filing: **16.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2018 EP 18215991**
**31.12.2018 EP 18215996**

(71) Applicant: **Atos IT Solutions and Services GmbH 1210 Wien (AT)**

(72) Inventors:
• **HAUSLEITNER, Christian**
**95870 Bezons (FR)**
• **GREILINGER, Erwin**
**95870 Bezons (FR)**
• **PAUK, Lukas**
**95870 Bezons (FR)**

(74) Representative: **Cabinet Camus Lebkiri**
**25 rue de Maubeuge**
**75009 Paris (FR)**

(54) **SYSTEM AND METHOD FOR IDENTIFYING SATELLITE TERMINALS CAUSING INTERFERENCE**

(57) The invention relates to a system comprising at least a monitoring device (9) configured to receive from a signal processing device separated bursts dedicated to satellite terminals (11), associate the separated bursts of each terminal (11) with the corresponding signal having a first or a second polarity (16, 16', 17), detect terminal(s) (11) causing polarity-interference between respectively first and second polarity signals (16, 16', 17) and estimate the level of polarity-interference using correlation techniques.

Fig 1

**Description**

The present invention relates to a system for identifying interference sources caused by at least a satellite terminal.

More specifically, the invention relates to a system for identifying and measuring the interference level of VSAT TDMA terminals causing uplink cross-polarization and/or uplink adjacent satellite interference. in a communication link. VSAT stands for Very Small Aperture Terminals and TDMA stands for Time Division Multiple Access.

**Background and disadvantage**

Satellites placed in geostationary orbit allows communications between earth stations each having an antenna pointing to the satellites. For example, a hub station may transmit a polarized radio frequency signal to the satellite, then the signal is shifted in frequency and retransmitted on the opposite polarization to one or several receiving terminals, for example VSAT TDMA terminals.

In order to considerably enhance throughput in data transmission, satellites are known to use multiple spot beams, each being characterized by the same signal frequency band. The same frequency band may then be reused, provided that in the same satellite, the opposite polarization can be reused, and in neighbor satellites, the same frequency band can be reused provided that the distance between adjacent satellites is sufficient.

To avoid polarity interference and/or adjacent satellite interference, meaning interferences between signals relayed by adjacent satellites, spot beam monitoring systems become more and more important for satellite operators.

A way to avoid interferences is to determine, while interfering signals are detected, the interfering terminals causing such interferences. However, such identification operations may sometimes be difficult especially when interference signal-to-noise ratio is very low and/or the interference signal is covered by other communication signals.

**Object of the invention**

It is an object of the invention to provide a system that is able to detect terminals causing polarity interferences and when appropriate adjacent satellite interferences, even if the interference signal-to-noise ratio is particularly low and/or covered by other communication signals.

For that, the system of the invention comprises a monitoring device configured to retrieve bursts for signals of opposite polarities relayed by a first satellite and when appropriate for signals from a second satellite before detecting and estimating the level of polarity interference and when appropriate the level of adjacent satellite interference.

This monitoring device allows detection of very low power interference level, increasing success rate in detecting terminals causing interferences.

Another object of the invention is to provide a method implemented by the system detecting terminals causing interferences, in order to determine the level of interferences caused by the considered terminal.

**Summary of the invention**

To this end, the invention relates to a system for identifying satellite terminals causing satellite relayed signals interference and for determining the level of such satellite relayed signals interference, each terminal communicating with a hub station via at least a satellite, the system comprising:

- A first return link ground receiver, configured to receive at least signals having a first polarity transmitted from the terminals to the hub station via the satellite;

- A second return link ground receiver, configured to receive at least signals having a second polarity opposite to the first polarity and transmitted from the terminals to the hub station via the satellite;

- At least a forward link ground receiver, configured to receive signals transmitted from the hub station to each terminal via the first satellite

- At least a signal processing device configured to demodulate and analyze the signal from the hub station and/or the return link signals in order to retrieve the time burst plan of each terminal so as to extract bursts dedicated to each terminal,

wherein the system comprises at least a monitoring device configured to receive from the processing device the separated bursts dedicated to each terminal, associate the separated bursts of each terminal with the corresponding signal having first or second polarity, detect terminal(s) causing polarity-interference between respectively first and second polarity signals and estimate the level of polarity-interference using correlation techniques.

The system of the invention may also include the following optional characteristics considered individually or according to all possible combination of techniques:

- The second link ground receiver is configured to receive signals having the first polarity transmitted from the terminals via a second satellite, the monitoring device being configured to receive from the processing device the separated bursts dedicated to each terminal, associate the separated bursts of each terminal with the corresponding signal from first or second satellite, detect terminal(s) causing interference between signals from respectively first and second satellites which are adjacent and estimate the level of adjacent satellite interference using correlation techniques.

- The first return link receiver is configured to receive co-polar signals from the first satellite and the second return link receiver is configured to receive cross-polar signals from the first satellite.

- The signal processing device comprises an inbound recorder module configured to receive the data from the first and second return link receivers, in order to retrieve the return link signals.

- The signal processing device comprises a burst separator module configured to receive data at least from the inbound recorder module and to extract bursts dedicated to each terminal.

- The signal processing device comprises an outbound recorder module configured to receive the data from the forward link receiver, in order to retrieve a time burst plan of terminals from the forward link signals.

- The signal processing device comprises a scanning module configured to receive the data from the outbound recorder module and to extract the metadata information from the time burst plan of terminals from the forward link signals.

- The burst separator module is configured to receive from the scanning module the time burst plan of terminals from the forward link signals.

The invention is to also provide a method implemented by the system for identifying satellite terminals causing interference cited above, in order to determine the isolation value related to the level of interference value between a co-polarized signal from the first satellite and the cross-talking components in signals from the first and/or second satellite dedicated to an interfering terminal, the method comprising the following steps:

• Determination of the auto-correlation peak value of the co-polarized signal component;

• Determination of the cross-ambiguity function (CAF) between the co-polarized signal and the cross-polarized signal from the first satellite, and/or between the co-polarized signal from the first satellite and the co-polarized signal from the second satellite;

• Detection and determination of the correlation peak in the cross-ambiguity function;

• Determination of the ratio between the peak values of the auto-correlation peak and the correlation peak in the cross-ambiguity function.

The method of the invention may also comprise the following optional characteristics considered individually or according to all possible combination of techniques:

- The ratio between the peak values of the auto-correlation peak and the correlation peak in the cross-ambiguity function is used to adjust an antenna linked to a terminal causing interference.

- The method comprises a step of applying measures to reduce the level of cross-talking signal component from other communication signals in the co-polarized signal, said measure being signal re-modulation and/or signal compression and/or coarse quantization and/or signal saturation applied on co-polarized signal.

- The method comprises a step of subtracting other communication signals components from co-polarized signal from the first satellite and/or from co-polarized signal from the second satellite, and a further step of applying Doppler compensation.

- The level of signal-to-noise ratio belonging to the cross-talking signal component of the cross-polarized signal from the first satellite or to the cross-talking signal component of the co-polarized signal from the second adjacent satellite is determined with the following steps:

  • Determination of spectrum of the co-polarized signal belonging to the first satellite and the signal affected by cross-talk;

  • Determination of the signal noise levels from said spectra;

  • Determination of the difference between the noise level of co-polarized signal belonging to the first satellite and the signal affected by cross-talk;

  • Correction of the isolation value with the difference of the noise levels;

  • Measure of the signal-to-noise ratio of the co-polarized signal component of the first satellite using spectrum and/or signal demodulation technique;

  • Subtraction the corrected isolation value from the signal-to-noise ratio of the co-polarized signal component of the first satellite to calculate the signal-to-noise ratio of the cross-talking component in signal.

**Brief description of the drawings**

Other characteristics and advantages of the invention will be apparent in the below descriptions, by way of indication and in no way limiting, and referring to the annexed figures among which:

Figure 1 is a schematic view of the invention receiving return link and forward link signals via the two satellites.

Figure 2 is a schematic detailed view of the system of the invention.

Figure 3 is a schematic view of the steps of the method of the invention.

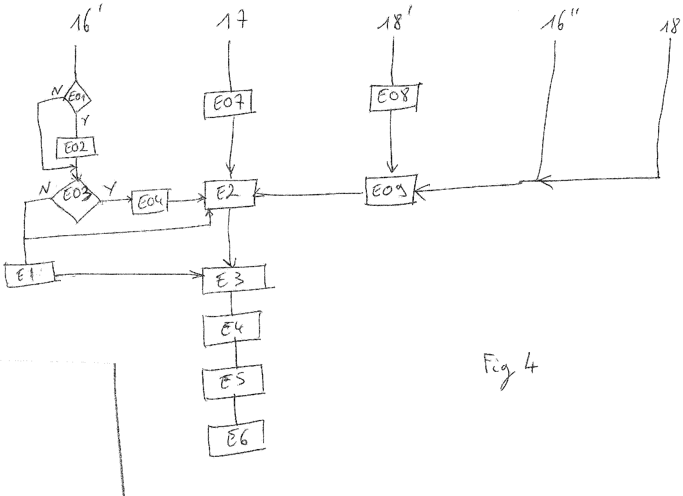

Figure 4 is a schematic detailed view of the steps of the method of the invention including the steps of reducing the impact from other communication signals and applying Doppler compensation in the case of ASI measurement.

**Detailed description**

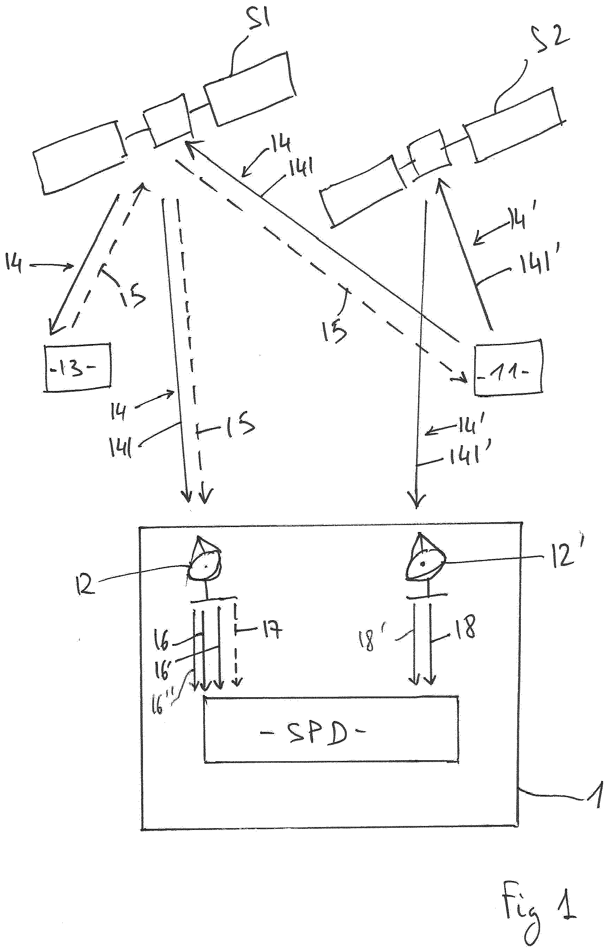

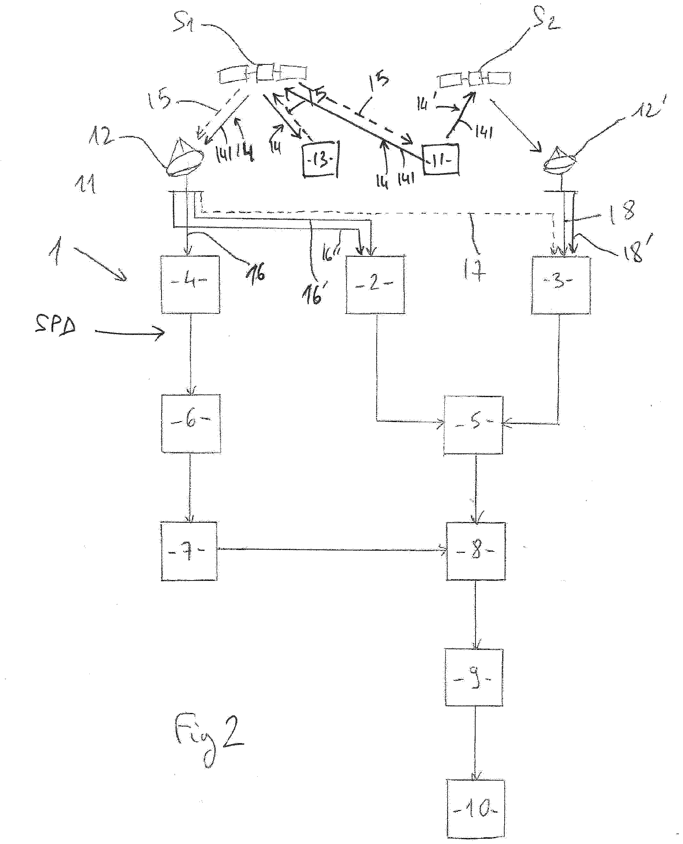

First, it is noted that on the figures, the same references designate the same elements regardless of the figures on which they feature and regardless of the form of these elements. Similarly, should elements not be specifically referenced on one of the figures, their references may be easily found by referring oneself to another figure.
It is also noted that the figures represent mainly one embodiment of the object of the invention but other embodiments which correspond to the definition of the invention may exist.
The system of the invention notably finds application in the field of satellite monitoring.
As is depicted in figures 1 and 2, the system 1 of the invention is configured to identify Very Small Aperture Terminal 11 (VSAT Terminals) using Time Division Multiple Access (TDMA) signals and causing satellite signals interference. Such a terminal 11 based on the ground comprises an antenna configured to receive signals 15 coming from a ground hub station 13 via a first satellite S1, or to send signals 14, 141 to said hub station 13 via satellite S1. The terminal 11 may also send signals 14', 141' via a second satellite S2. Thus, the antenna of each terminal 11 is orientated towards the first satellite S1 and/or the second satellite S2. Signals received by the terminal 11 and coming from the hub station 13 are called forward link signals 15, while signals sent by the terminals 11 eventually to the hub station 13 are called return link signals 14, 141, 14', 141'.
In case of misalignments of the terminals' antennas, said terminals 11 may produce signal interferences. These interferences may be of two types. They may be first due to interference between a signal having a first polarity 16, 16' and a signal having a second polarity 17 opposite to the first polarity 16, 16', both signals coming from the first satellite S1. Interferences may be secondly due to time domain interference between a signal having the first polarity 16' from the first satellite S1 and a signal having the same first polarity 18 from the second satellite S2 to which the terminals

4

transmit according to their antenna radiation pattern and the distance between the adjacent satellites. In the following, this signal having the first polarity 18 and relayed by the second satellite S2 will be called adjacent satellite signal 18, and the cross-talking signal component, resulting from interferences between signals relayed by satellite S1 and signals relayed by satellite S2, will be called adjacent satellite interference.

The system of the invention is able to detect signals having any kind of polarity. However, in the following, it will be assumed that signals having first polarity 16, 16', 18 are co-polar signals, and signals having second polarity 17 opposite to the first polarity are cross-polar signals.

According to the invention, the system 1 which is based on the ground comprises at least two antennas 12, 12' configured to receive signals from terminals 11 via satellites S1 and/or S2. More precisely, the first antenna 12 is configured to receive both polarization signals, co-polar signals 14 and cross-polar signals 141 transmitted from the terminals 11 to the hub station 13 via the first satellite S1 and signals 15 transmitted from the hub station 13 to the terminals 11 via the first satellite S1, while the second antenna 12' is configured to receive signals 14', 141' from the terminals 11 via the second satellite S2. In an alternative embodiment, the antennas 12, 12' of the system 1 may be antennas of the hub station 13. In this particular case, return link signals 14', 141' from terminal 11 may be transmitted to the hub station 13 via satellite S2.

The system also comprises two return link ground receivers 2, 3 configured to receive signals 14, 141, 14', 141' respectively from the first and second antennas 12, 12'. The first return link receiver 2 is configured to receive co-polar signals 16' from the first satellite S1, while the second return link receiver 3 is configured to receive at least the cross-polar signals 17 from the first satellite S1 which may consist of other communication signals and return link signals 141 belonging to misaligned terminals 11, and the return link signals 14" which are part of adjacent satellite signals 18 in terms of misaligned terminals 11 relayed by the second satellite S2.

In addition, the system 1 comprises at least one forward link ground receiver 4 configured to receive signals 15, transmitted from the hub station 13 to the terminals 11 and relayed by the first satellite S1. Said forward link receiver 4 is a demodulator provided to demodulate the received forward link signals 15, in order to further extract the time burst plan of each terminal 11, said extraction being made further by a signal processing device SPD comprised in the system 1.

It must be understood that the first polarity signals 16' from satellite S1 constitute return link signals 14, the second polarity signals 17 from satellite S1 constitute the return links signals 141 of misaligned terminals 11 and possible other signals of earth stations transmitting with this polarization. The first polarity signals 18' from satellite S2 constitute the return link signals 141' of misaligned terminals 11 and possible other signals of earth stations transmitting via satellite S2 with this polarization, the first polarity signals 18 from satellite S2 constitute the return link signal 14', and the first polarity signals 16 from satellite S1 constitute the forward link signals 15.

The signal processing device is configured to decode and analyze forward link signals 15 already demodulated by the forward link receiver 4. Depending on the VSAT technology, the SPD is also configured to demodulate, decode and analyze the return link signal 14, provided by the first return link receiver 2.

It is known that each TDMA frame corresponds to a time-frequency pattern with a fixed time duration and a fixed frequency band. The frequency band of the frame is divided into several carriers. Each carrier is divided into several timeslots that are shared between different users (each user having at least a terminal).

Each user transmits his data by distributing them in the timeslots that have been allocated to him. The allocation of timeslots between the different users is supported by the hub station 13 while the terminals 11 renders the data sent by each user: In order to avoid overlapping between two terminals 11, each timeslot consists of a burst. Thus, to identify interferences caused by any terminal 11, there is a need to extract the time burst plan of each terminal 11, thanks to the signal processing device. A time burst plan basically contains a list of active VSAT terminals 11 and burst information.

This signal processing device SPD will now be described.

The processing device comprises an inbound recorder module 5 configured to receive the data from the first and second return link receivers 2, 3, in order to retrieve the TDMA return link signals 14, 141, 14', 141'.

The processing device SPD also comprises an outbound recorder module 6 configured to receive the data from the forward link receiver 4, in order to retrieve the time burst plan of the terminals 11. The time burst plan data from the outbound recorder module 6 is then forwarded to a scanning module 7 comprised in the processing device. The scanning module 7 identifies the VSAT technology (for example DVB-RCS or Hughes IPoS) and extracts the metadata information of the time burst plan from the forward link signals 15.

The processing device SPD also comprises a burst separator module 8 configured to retrieve the TDMA data of the return link signals 14, 141, 14', 141' from the inbound recorder 5. With the burst information and the metadata of the time burst plan from the scanning module 7, the burst separator module 8 is able to extract (cut out in time domain) bursts dedicated to the same terminal 11 belonging to each frequency channel. The list of active VSAT terminals 11 is also forwarded. An operator can now select either all active VSAT terminals 11 of the list, or a subset of specific VSAT terminals 11.

Finally, the processing device SPD comprise a monitoring device 9 configured to receive the bursts separated by the burst separator module 8, and to associate the separated bursts of each terminal 11 with the corresponding co-polar and cross-polar signals 16, 16', 17 and with the corresponding co-polar signals 16, 16', 18 from the first and second satellites S1, S2.

The monitoring device 9 is also configured to detect and estimate for each terminal the level of either cross-polar interference between co-polar and cross-polar signals 16, 16', 17 relayed by the first satellite S1 and to detect and estimate the level of adjacent satellite interference between signals 16, 16', 18' relayed by respectively the first satellite S1 and the second satellite S2. The monitoring device is also configured to detect which terminal(s) 11 are causing such interferences.

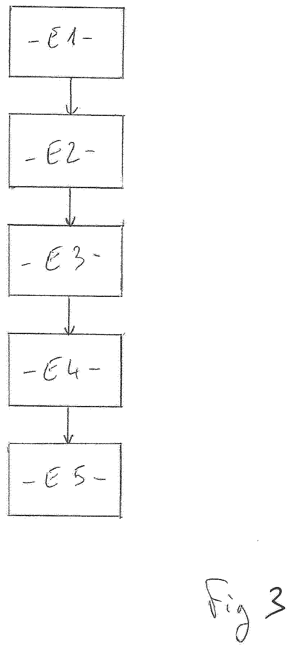

According to figure 3, the monitoring device of the invention can implement a method to determine the isolation value related to the level of interference value between the co-polarized signals 16, 16' from the first satellite S1 and the cross-talking components in signals 17, 18' dedicated to any interfering terminal 11. With this method, VSAT terminals 11 having even small level off cross-talk (in other words high isolation value) can be identified.

Cross talking signal components are contained in:

- cross-polarized signal 17 from the first satellite S1, and

- adjacent satellite signal 18' from the second satellite S2.

In a first step E1, the monitoring device 9 determines the auto-correlation peak value of the co-polarized signal 16'. In other words, the monitoring device 9 calculates the peak from an auto-correlation function (ACF) of the signal received from the first satellite S1. In the case of VSAT TDMA signals E01, the extracted bursts dedicated to one terminal have to be applied E02 before calculating the ACF peak value E1 which gives the energy of said co-polarized signal E(16') dedicated to one terminal. For the sake of completeness, it shall be mentioned that this ACF peak value also includes small energy contributions from noise and components of other communication signals (OCS - E03) which are themselves cross-talking to the co-polarized signal 16'. Such other communication signals are cross-polarization signals transmitted from earth stations having their antenna not perfectly polarization aligned with the cross-polarization of satellite S1 and/or earth stations transmitting via the adjacent satellite S2 causing cross-talk according to their antennas' radiation pattern and the distance between the adjacent satellites S1, S2. This energy contribution value is given by E(OCS) / Square Root(Iso(OCS)) where Iso stands for isolation and Iso(OCS) is the isolation value dedicated to the other communication signals.

In a second step E2, the monitoring device 9 determines the cross-ambiguity function (CAF) between the co-polarized signal 16' of the first satellite S1 and the cross-polarized signal 17, and/or between the co-polarized signal 16' of the first satellite S1 and the adjacent satellite signal 18' of the second satellite S2. In the case of VSAT TDMA signals E01, bursts dedicated to one terminal have to be extracted first E02 from the co-polarized signal 16' before being applied for calculating the cross-ambiguity-function E2 between a reference co-polarized signal 16" and interfering co-polarized signal 16' from satellite S1. Furthermore, in the case of ASI measurements the adjacent satellite signal 18 may be corrected from Doppler influences E09 which can be derived from other communication signal(s) measurements. This correction needs to be applied before determining the cross-ambiguity function between the co-polarized signal 16' and the adjacent satellite signal 18'.

In a third step E3, the monitoring device 9 detects and determines the correlation peak in the cross-ambiguity function. In other words, the monitoring device 9 calculates the peak from the cross-ambiguity-function (CAF) between the co-polarized signal 16' of the first satellite S1 and the cross-polarized signal 17, and/or between the co-polarized signal 16' of the first satellite S1 and the adjacent satellite signal 18, giving: E(16') / Square Root(Iso(16')) + E(OCS) / Square Root(Iso(OCS)) where Iso(16') is the isolation value related to the level of interference between the co-polarized signal 16' from the first satellite S1 and the cross-talking components in signals 17, 18 dedicated to any terminal 11.

In a fourth step E4, the monitoring device determines the ratio between the peak values of the auto-correlation peak and the correlation peak in the cross-ambiguity function. In other words, the monitoring device calculates the ratio of said peaks what gives, after squaring, the isolation between the co-polarized signal 16' from first satellite S1 and the cross-talking components in signal 17, 18' dedicated to any terminal 11, reduced by contribution from other communication signals in terms of:

$$(E(16') + E(OCS) / \text{Square Root}(Iso(OCS))) / (E(16') / \text{Square Root}(Iso(16')) + E(OCS) / \text{Square Root}(Iso(OCS)))$$

In order to eliminated or reduce the influence from other communication signals E03, the system may apply measures to reduce the level of the cross-talking signal component E04 from other communication signals in the co-polarized signal 16'. Such measures are signal re-modulation, signal compression, coarse quantization or signal saturation applied on signal 16' before being further processed in terms of auto-correlation and/or cross-ambiguity function calculation.

Another option to reduce the influence from other communication signals is to subtract relevant other communication signal components from signal 17, 18' before applying cross-correlation function or Doppler compensation processing. This task includes demodulation and re-modulation of other communication signals belonging to signal 17, 18' before subtracting the re-modulates signal E07, E08.

In a fifth step E5, this ratio can be used by an operator to adjust an antenna linked to a VSAT terminal 11 causing interference.

Optionally, to determine the level of signal-to-noise ratio E6 belonging to the cross-talking signal component of the cross-polarized signal 17 from the first satellite S1 or to the cross-talking signal component of the adjacent satellite signal 18 of the second adjacent satellite S2, the monitoring device 9 may implement the following steps:
In a first step, the monitoring device 9 determines a spectrum of the co-polarized signal 16, 16' and the signal affected by cross-talk 17, 18'.

In a second step, the monitoring device 9 determines the signal noise level from said spectra.

In a third step, the monitoring device 9 determines the difference between the noise level of co-polarized signal 16, 16' and the signal affected by cross-talk 17, 18'.

In a fourth step, the monitoring device 9 corrects the isolation value with the difference of the noise levels. In other words, as a first result noise level of cross talking signal is subtracted from noise level of co-polarized signal. This first result is subtracted from the isolation value calculated above in order to obtain a corrected isolation value.

In a fifth step, the monitoring device 9 measures the signal-to-noise ratio of the co-polarized signal component 16, 16' using spectrum and/or signal demodulation technique.

In a sixth step, the monitoring device 9 subtracts the corrected isolation value from the signal-to-noise ratio of the co-polarized signal component 16, 16' to calculate the signal-to-noise ratio of the cross-talking components in signal 17, 18.

With the method of the invention, and unlike state of art, there is no need to calculate the cross-ambiguity function noise level which is affected by side-lobes surrounding the peak and signal dependent influences.

The system 1 of the invention also comprises a geolocation module 10 configured to geolocate a specific VSAT terminal 11, particularly VSAT terminals causing interferences detected thanks to the monitoring device 9.

This geolocation module 10 is configured to receive data from the monitoring device 9. The geolocation module 10 is thus configured to implement a geolocation method based on TDOA/FDOA techniques (Time Difference Of Arrival / Frequency Difference Of Arrival). The geolocation module 10 analyses interfering signals detected by the monitoring device 9 in order to geolocate terminals 11 causing such interferences, said interfering signals being compared to reference signals which have a known uplink location. Such reference signal can be transmit via the first satellite S1 in terms of being part of the co-polar signal 16, 16' or via the second satellite S2 being part of signal 18'.

The geolocation method of the invention will now be described.

TDMA signals are made of bursts, so that the cross-ambiguity function (CAF) surface shows multiple peaks in FDOA direction. For geolocation purpose it is important to perform precise differential FDOA and TDOA measurements between the CAF peak belonging to the VSAT TDMA signal and the CAF peak belonging to reference carrier signals. For achieving this, there needs to be applied the same time domain windowing on the reference signals as it is implicitly the case due to the bursty nature of the TDMA signal belonging to a single terminal 11.

In a first step, the geolocation module 10 is receiving data from the monitoring device 9. These data contain the list of interfering terminals 11 and bursts dedicated to those interfering terminals 11 as well as reference signals.

In a second step, the windowing is applied on a reference signal according to bursts of signals from an interfering VSAT terminal 11. This windowing is performed by multiplying the reference carrier signal with a sequence of a rectangular shaped waveform which follow the pattern of the burst time plan dedicated to the terminal 11 to be geolocated.

In a third step, Doppler compensation is applied to the reference signal and interference signal component of the adjacent satellite signal 18' in order to compensate for decorrelation caused by satellite movement to improve method accuracy.

In a fourth step, cross-ambiguity function is determined between the separated bursts of the terminal 11 to be geolocated and the Doppler compensated adjacent satellite signal 18' containing the cross-talk of the interference signal. Another cross-ambiguity function is determined between at least one windowed reference signal of the co-pol signal 16' and the Doppler compensated adjacent satellite signal 18' containing cross-talk of the reference signal.

In a fifth step, the system searches for the peaks in the cross-ambiguity functions and calculates the TDOA difference between them. TDOA difference may also be directly used to geolocate interfering terminals 11.

In a sixth step, TDOA difference is applied to correct the windowing followed by repeating steps 4 and 5.

In a seventh step, precise FDOA difference between the correlation peaks is calculated in terms of determining the cross-correlation function in FDOA domain between the cross-ambiguity function results of the interference signal and the reference signal both cut at the TDOA value of their individual peaks.

Finally, interfering terminals 11 are geolocate in a ninth step.

Thanks to the geolocation method of the invention, high acquisition time, at least 100 seconds, are possible without causing any CAF peak signal-to-noise ratio degradation. Geolocation accuracy is thus improved without degradation of signal-to-noise ratio.

**Claims**

1. System (1) for identifying satellite terminals (11,) causing satellite relayed signal interferences and for determining the level of such satellite relayed signal interferences, each terminal (11) communicating with a hub station (13) via at least a satellite (S1), the system (1) comprising:

   • A first return link ground receiver (2), configured to receive at least signals (16') having a first polarity transmitted from the terminals (11) to the hub station (13) via the satellite (S1);
   • A second return link ground receiver (3), configured to receive at least signals (17) having a second polarity opposite to the first polarity and transmitted from the terminals (11) to the hub station (13) via the satellite (S1);
   • At least a forward link ground receiver (4), configured to receive signals (15) transmitted from the hub station (13) to each terminal (11) via the first satellite (S1);
   • At least a signal processing device configured to demodulate and analyze the signal (15) from the hub station (13) and/or return link signals (14, 141) in order to retrieve the time burst plan of each terminal (11) so as to extract bursts dedicated to each terminal (11),

   wherein the system comprises at least a monitoring device (9) configured to receive from the processing device the separated bursts dedicated to each terminal (11), associate the separated bursts of each terminal (11) with the corresponding signal (16', 17) having first or second polarity, detect terminal(s) (11) causing polarity-interference between respectively first and second polarity signals (16', 17) and estimate the level of polarity-interference using correlation techniques.

2. System according to claim 1, wherein the second link ground receiver (3) is configured to receive signals having the first polarity (18, 18') transmitted from the terminals (11) via a second satellite (S2), the monitoring device (9) being configured to receive from the processing device the separated bursts dedicated to each terminal (11), associate the separated burst of each terminal (11) with the corresponding signal (16', 18') from first or second satellite (S1, S2), detect terminal(s) (11) causing interference between signals (16', 18) from respectively first and second satellites (S1, S2) which are adjacent and estimate the level of adjacent satellite interference using correlation techniques.

3. System according to any of the preceding claims, wherein the first return link receiver (2) is configured to receive co-polar signals (16') from the first satellite (S1) and the second return link receiver (3) is configured to receive cross-polar signals (17) from the first satellite (S1).

4. System according to any of preceding claims, wherein the signal processing device comprises an inbound recorder module (5) configured to receive the data from the first and second return link receivers (2, 3), in order to retrieve the return link signals (14, 141, 14', 141').

5. System according to the preceding claim, wherein the signal processing device comprises a burst separator module (8) configured to receive data at least from the inbound recorder module (5) and to extract bursts dedicated to each terminal (11).

6. System according to any of the preceding claims, wherein the signal processing device comprises an outbound recorder module (6) configured to receive the data from the forward link receiver (4), in order to retrieve a time burst plan of terminals (11) from the forward link signals (15).

7. System according to the preceding claim, wherein the signal processing device comprises a scanning module (7) configured to receive the data from the outbound recorder module (6) and to extract the metadata information from the time burst plan of terminals (11) from the forward link signals.

8. System according to the preceding claim, wherein the burst separator module (8) is configured to receive from the scanning module (7) the time burst plan of terminals (11) from the forward link signals (15).

9. Method implemented by the system (1) for identifying VSAT TDMA terminals (11) causing interference according to claims 1 to 8, in order to determine the isolation value related to the level of interference value between a co-polarized signal (16, 16') from the first satellite (S1) and the cross-talking components in signals (17, 18') from the first and/or second satellites (S1, S2) dedicated to an interfering terminal (11), the method comprising the following steps:

   • Determination of the auto-correlation peak value of the co-polarized signal component (16, 16');
   • Determination of the cross-ambiguity function (CAF) between the co-polarized signal (16, 16') and the cross-polarized signal (17) from the first satellite (S1), and/or between the co-polarized signal (16, 16') from the first satellite (S1) and the co-polarized signal (18') from the second satellite (S2);
   • Detection and determination of the correlation peak in the cross-ambiguity function;
   • Determination of the ratio between the peak values of the auto-correlation peak and the correlation peak in the cross-ambiguity function.

10. Method according to the preceding claim, wherein the ratio between the peak values of the auto-correlation peak and the correlation peak in the cross-ambiguity function is used to adjust an antenna linked to a terminal (11) causing interference.

11. Method according to claim 9 or 10, comprising a step of applying measures to reduce the level of cross-talking signal component from other communication signals (OCS) in the co-polarized signal (16'), said measure being signal re-modulation and/or signal compression and/or coarse quantization and/or signal saturation applied on co-polarized signal (16').

12. Method according to any of claim 9 to claim 11, comprising a step of subtracting other communication signals (OCS) components from co-polarized signal (17) from the first satellite (S1) and/or from co-polarized signal (18') from the second satellite (S2), and a further step of applying Doppler compensation.

13. Method according to of claim 9 to claim 12, wherein the level of signal-to-noise ratio belonging to the cross-talking signal component of the cross-polarized signal (17) of the first satellite (S1) or to the cross-talking signal component of the co-polarized signal (18') of the second adjacent satellite(S2) is determined with the following steps:

   • Determination of spectrum of the co-polarized signal (16, 16') belonging to the first satellite (S1) and the signal affected by cross-talk (17, 18');
   • Determination of the signal noise levels from said spectra;
   • Determination of the difference between the noise level of co-polarized signal (16, 16') belonging to the first satellite (S1) and the signal affected by cross-talk (17, 18');
   • Correction of the isolation value with the difference of the noise levels;
   • Measure of the signal-to-noise ratio of the co-polarized signal (16, 16') component of the first satellite (S1) using spectrum and/or signal demodulation technique;
   • Subtraction of the corrected isolation value from the signal-to-noise ratio of the co-polarized signal component (16, 16') of the first satellite (S1) to calculate the signal-to-noise ratio of the cross-talking component in signal (17, 18').

Fig 1

S1

S2

15

15

15

14'

12'

12

141 14

14

141

13

11

14 141

11

18

1

16

16"

2

18'

SPD

16'

3

17

6

5

7

8

9

10

Fig 2

Fig 3

Fig 4

Europäisches
Patentamt

European
Patent Office

Office européen
des brevets

# EUROPEAN SEARCH REPORT

Application Number

EP 19 19 7599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 991 946 B2 (KRATOS NORWAY AS [NO]) 5 June 2018 (2018-06-05) * column 1, line 19 - line 24 * * column 1, line 60 - line 61 * * column 3, line 46 - column 3, line 38 * * column 3, line 48 - column 5, line 31 * * column 5, line 55 - column 6, line 15 * * column 6, line 30 - column 6, line 54 * * claim 1; figures 1, 2 * | 1-8 | INV. H04B7/185 |
| A | US 2009/086862 A1 (THESLING WILLIAM H [US] ET AL) 2 April 2009 (2009-04-02) * paragraphs [0005], [0026] * * paragraph [0032] - paragraph [0034] * * paragraph [0061] - paragraph [0062] * * claim 1; figures 1, 2, 6 * | 1-8 | |
| A | WO 02/091599 A2 (COMSAT CORP [US]; SANDRIN WILLIAM A [US]) 14 November 2002 (2002-11-14) * abstract * * paragraph [0001] - paragraph [0005] * * paragraphs [0011], [0014], [0016] * * paragraph [0021] - paragraph [0022] * * paragraph [0025] - paragraph [0026] * * paragraph [0030] * * claims 1, 11; figures 1A, 2 * | 1-8 | TECHNICAL FIELDS SEARCHED (IPC) H04B |

-/--

~~The present search report has been drawn up for all claims~~

| Place of search | Date of completion of the search | Examiner |
|---|---|---|
| The Hague | 13 December 2019 | Wijting, Carl |

page 1 of 2

Europäisches
Patentamt

European
Patent Office

Office européen
des brevets

## EUROPEAN SEARCH REPORT

Application Number

EP 19 19 7599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ITU: "Handbook Radiocommunication Bureau Radiocommunication Bureau Handbook SPECTRUM MONITORING *36355* SPECTRUM MONITORING", <br> , <br> 1 January 2011 (2011-01-01), pages 300-380, XP055651619, <br> Retrieved from the Internet: <br> URL:https://www.itu.int/dms_pub/itu-r/opb/hdb/R-HDB-23-2011-PDF-E.pdf <br> [retrieved on 2019-12-10] <br> * page 301, paragraph 4.8.1.2 * <br> * page 305; figure 4.8.03 * <br> * page 380, paragraph 5.1.2.7 - page 381 * <br> ----- | 1-8 | |

TECHNICAL FIELDS
SEARCHED (IPC)

~~The present search report has been drawn up for all claims~~

| Place of search | Date of completion of the search | Examiner |
|---|---|---|
| The Hague | 13 December 2019 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 19 19 7599

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8

☐ The present supplementary European search report has been drawn up for those parts of the European patent application which relate to the invention first mentioned in the claims (Rule 164 (1) EPC).

**Europäisches Patentamt**

**European Patent Office**

**Office européen des brevets**

**LACK OF UNITY OF INVENTION**
**SHEET B**

The Search Division considers that the present European patent application does not comply with the requirements of unity of invention and relates to several inventions or groups of inventions, namely:

```
1. claims: 1-8

        relate to a system for identifying interference sources and
        the level of interference caused by satellite terminals.
                              ---

2. claims: 9-13

        relate to a specific method to determine the interference
        value between a co-polarized signal from a first satellite
        and the cross-talking component from the first and/or a
        second satellite.
                              ---
```

## ANNEX TO THE EUROPEAN SEARCH REPORT
## ON EUROPEAN PATENT APPLICATION NO.

EP 19 19 7599

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2019

| Patent document cited in search report | | | Publication date | Patent family member(s) | | | Publication date |
|---|---|---|---|---|---|---|---|
| US 9991946 | | B2 | 05-06-2018 | EP | 3210317 | A2 | 30-08-2017 |
| | | | | EP | 3567750 | A1 | 13-11-2019 |
| | | | | NO | 341241 | B1 | 25-09-2017 |
| | | | | US | 2017353231 | A1 | 07-12-2017 |
| | | | | WO | 2016064281 | A2 | 28-04-2016 |
| US 2009086862 | | A1 | 02-04-2009 | EP | 2201702 | A1 | 30-06-2010 |
| | | | | US | 2009086862 | A1 | 02-04-2009 |
| | | | | WO | 2009046120 | A1 | 09-04-2009 |
| WO 02091599 | | A2 | 14-11-2002 | AU | 2002305411 | A1 | 18-11-2002 |
| | | | | US | 2005085186 | A1 | 21-04-2005 |
| | | | | WO | 02091599 | A2 | 14-11-2002 |
| | | | | WO | 02091639 | A1 | 14-11-2002 |

EPO FORM P0459

For more details about this annex : see Official Journal of the European Patent Office, No. 12/82